# EUROPEAN PATENT APPLICATION

(11) **EP 2 784 284 A2**
(43) Date of publication of application: **01.10.2014**
(21) Application number: 14161539.3
(22) Date of filing: 25.03.2014
(51) Int. Cl.: F01N 3/28, F01N 3/20, B32B 27/00

(54) **Holding sealing material, method for manufacturing holding sealing material, exhaust gas purifying apparatus, and method for manufacturing exhaust gas purifying apparatus**

(30) Priority: 26.03.2013 JP 2013064684; 17.03.2014 JP 2014053774
(71) Applicant: Ibiden Co., Ltd., Ogaki-shi Gifu 503-8604 (JP)
(72) Inventor: Sugiura, Yuya, Aichi, 444-1301 (JP); Ando, Hisashi, Aichi, 444-1301 (JP)
(74) Representative: HOFFMANN EITLE

(57) **Abstract**

Provided is a holding sealing material (130) for exhaust gas purifying apparatuses which achieves an excellent heat insulation effect, is less likely to cause problems such as connection failures, and requires no holes or the like therein. The holding sealing material (130) includes a mat that contains inorganic fibers and has a rectangular shape in a plan view, the mat having at least one pair of electrodes (160) arranged on a main surface of the mat.

## Description

### TECHNICAL FIELD

The present invention relates to a holding sealing material, a method for manufacturing the holding sealing material, an exhaust gas purifying apparatus, and a method for manufacturing the exhaust gas purifying apparatus.

### BACKGROUND ART

Exhaust gases discharged from internal combustion engines (e.g., diesel engines) contain particulate matter (hereinafter, referred to also as PM). In recent years, the PM has been a problem as it is harmful to the environment and the human body. Since exhaust gases also contain harmful gas components such as CO, HC and NOₓ, the influence of the harmful gas components on the environment and human bodies has also been concerned.

Therefore, various exhaust gas purifying apparatuses for collecting PM in exhaust gases and purifying the harmful gas components have been developed. Such exhaust gas purifying apparatuses include those having an exhaust gas treating body formed from a porous ceramic material (e.g., silicon carbide, cordierite) or metal, a casing for housing the exhaust gas treating body, and a holding sealing material provided between the exhaust gas treating body and the casing.

A catalyst converter for purifying harmful gas components, which is one of the above exhaust gas purifying apparatuses, allows its exhaust gas treating body to achieve sufficient catalyst activity only when the temperature of the exhaust gas treating body has reached a certain activation temperature. The temperature of the exhaust gas treating body, however, may be lower than the activation temperature immediately after the start of an internal combustion engine (e.g., gasoline engine) or when the engine of a hybrid-engine vehicle is turned off, for example. In such cases, the exhaust gas treating body may not be able to sufficiently clean up the harmful gas components.

To deal with such cases, Patent Literature 1 teaches a catalyst converter for purifying exhaust gases which includes metallic catalyst carriers. The metallic catalyst carriers serve as heating resistors by themselves, i.e., electrical heaters, to increase the temperatures of the metallic catalyst carriers to the activation temperature or higher.

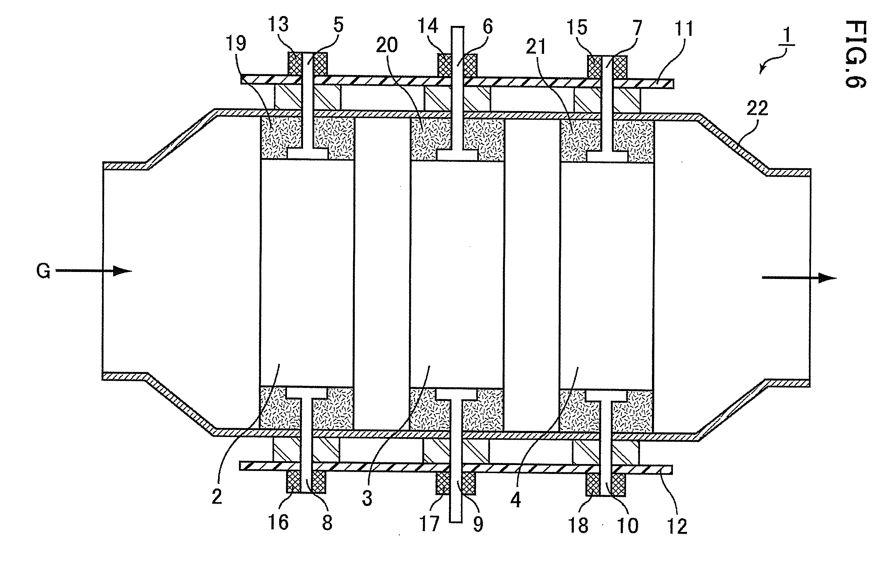

Fig. 6 is a cross-sectional view schematically illustrating a conventional catalyst converter for purifying exhaust gases which utilizes metallic catalyst carriers as heating resistors.

A catalyst converter 1 for purifying exhaust gases shown by Fig. 6 includes metallic catalyst carriers 2 to 4 spaced from one another in a casing (metallic shell) 22 in the exhaust gas flowing direction. The metallic catalyst carriers 2 to 4 each are formed by brazing the ends of an elliptically wound alternate laminate of wavy metal plates and flat plates which carry catalysts. To the metallic catalyst carriers 2 to 4, positive electrodes 5 to 7 and negative electrodes 8 to 10 which penetrate the casing 22 are respectively attached. The positive electrodes 5 to 7 are connected by a conductive heat sink 11, and the negative electrodes 8 to 10 are connected by a conductive heat sink 12. The projections of the electrodes 5 to 10 are respectively secured with nuts 13 to 18. Between the metallic catalyst carriers 2 to 4 and the casing 22, circular holding sealing materials (mat components) 19 to 21 which are electrical insulation materials and have a buffering effect are disposed.

### CITATION LIST

### Patent Literature

Patent Literature 1: JP-A H05-269387

### SUMMARY OF INVENTION

### Technical Problem

The catalyst converter 1 for purifying exhaust gases, however, has the following problems.

That is, the holding sealing materials 19 to 21 are provided with holes, and the electrodes 5 to 10 are inserted into these holes so as to connect the metallic catalyst carriers 2 to 4 to the electrodes 5 to 10. Thus, an increase in the contact areas between the metallic catalyst carriers 2 to 4 and the electrodes 5 to 10 reduces the area of the holding sealing materials 19 to 21. This unfortunately reduces the total repulsive power of the holding sealing materials and the heat insulation effect on the metallic catalyst carriers 2 to 4. Meanwhile, a decrease in the size of the holes formed on the holding sealing materials 19 to 21 reduces the contact areas between the metallic catalyst carriers 2 to 4 and the electrode members 5 to 10. This unfortunately easily causes connection failures.

The present invention has been made to solve the above problems, and aims to provide a holding sealing material for exhaust gas purifying apparatuses which achieves an excellent heat insulation effect, is less likely to cause problems such as connection failures, and requires no holes or the like in a mat of the holding sealing material; a method for manufacturing the holding sealing material; an exhaust gas purifying apparatus including the holding sealing material; and a method for manufacturing the exhaust gas purifying apparatus including the holding sealing material.

### Solution to Problem

The holding sealing material of the present invention made to achieve the above aim includes a mat which contains inorganic fibers and has a rectangular shape in a plan view. The mat of the holding sealing material has at least one pair of electrodes arranged on a main surface thereof.

The holding sealing material of the present invention is usually wound around an exhaust gas treating body having electric conductivity, and the exhaust gas treating body around which the holding sealing material is wound is housed in a casing so to be used as an exhaust gas purifying apparatus. The holding sealing material of such an exhaust gas purifying apparatus has at least one pair of electrodes. In such an exhaust gas purifying apparatus, the exhaust gas treating body having electric conductivity can be energized at a desired timing to cause the exhaust gas treating body to generate heat.

Thus, the exhaust gas purifying apparatus including the holding sealing material not only can increase the temperature of the exhaust gas treating body (catalyst carrier) immediately after the start of an internal combustion engine (e.g., gasoline engine) but also can cause the exhaust gas treating body to generate heat to maintain its temperature at a predetermined temperature or higher in a vehicle equipped with a motor and an engine (e.g., hybrid vehicle) when the motor is running but the engine is not running. The exhaust gas treating body therefore can function immediately as an exhaust gas purifying apparatus.

The exhaust gas purifying apparatus including the holding sealing material of the present invention requires no holes in the mat of the holding sealing material. Therefore, it is not necessary to reduce the insulation area. For this reason, the exhaust gas purifying apparatus provided does not cause a decrease in the total repulsive power of the mat of the holding sealing material, and can sufficiently insulate the exhaust gas treating body using the holding sealing material.

In the exhaust gas purifying apparatus including the holding sealing material of the present invention, the electrodes arranged on the mat of the holding sealing material are fixed between the mat of the holding sealing material and the exhaust gas treating body by the surface pressure from the mat of the holding sealing material. Even when the volume of the exhaust gas treating body is increased as a result of thermal expansion, the mat of the holding sealing material can absorb the increase in the volume. Therefore, the electrodes are less likely to come off the exhaust gas treating body and to cause connection failure even when the volume of the exhaust gas treating body increases to have a different shape.

The exhaust gas purifying apparatus including the holding sealing material of the present invention does not require insertion of electrodes from the outside of the casing as in the case of conventional exhaust gas purifying apparatuses, which eliminates the need for forming holes in the casing and the mat of the holding sealing material. Therefore, there is no need for matching the positions of the casing and the holding sealing material in manufacturing the exhaust gas purifying apparatus. The exhaust gas treating body around which the holding sealing material is wound can accordingly be housed in the casing by, for example, press fitting or sizing.

The holding sealing material of the present invention including an organic sheet attached to the main surface of the mat to cover the electrodes.

In a holding sealing material having the above structure, the organic sheet protects the electrodes to prevent damage on the electrodes due to, for example, external shocks.

If a holding sealing material does not have an organic sheet when wound around the exhaust gas treating body, electrodes and the exhaust gas treating body come into direct contact with each other, which may cause the electrodes and the exhaust gas treating body to be rubbed against each other to result in breakage of the electrodes. In contrast, the holding sealing material having the above structure does not bring the electrodes and the exhaust gas treating body into direct contact with each other, preventing breakage of the electrodes.

Also, since the above structure of the holding sealing material allows the electrodes to be fixed on the main surface of the mat of the holding sealing material by the organic sheet, an exhaust gas purifying apparatus provided with electrodes can be easily manufactured by winding the holding sealing material having the above structure, without any change, around the exhaust gas treating body to arrange the electrodes between the mat of the holding sealing material and the exhaust gas treating body.

Furthermore, when exhaust gases flow into the exhaust gas purifying apparatus including the holding sealing material having the above structure, the organic sheet will be pyrolyzed. As a result, the electrodes and the exhaust gas treating body come into direct contact with each other. Passing electricity to the electrodes in such a state allows energization of the exhaust gas treating body to cause the exhaust gas treating body to generate heat.

The organic sheet in the holding sealing material of the present invention is preferably made of at least one material selected from the group consisting of polyolefin resins, vinyl resins, polystyrene resins, and polyester resins.

In the case that the organic sheet is made of at least one material selected from the group consisting of polyolefin resins, vinyl resins, polystyrene resins, and polyester resins, the holding sealing material can absorb external shocks because these resins have sufficient flexibility. Also in this case, the organic sheet is more likely to be pyrolyzed when exhaust gases flow into the exhaust gas purifying apparatus including the holding sealing material having the above structure.

The organic sheet is preferably attached to the main surface of the mat of the holding sealing material of the present invention by thermocompression bonding.

Attachment of the organic sheet onto the main surface of the mat of the holding sealing material by thermcompression bonding allows fixation of the electrodes without any other agent (e.g., adhesive) for bonding the electrodes and the organic sheet. Accordingly, the resulting exhaust gas purifying apparatus can be more inexpensive.

The electrodes in the holding sealing material of the present invention each are preferably made of at least one material selected from the group consisting of platinum, gold, silver, silicon, and silicon-silicon carbide.

The electrodes exhibit increased conductivity if they each are made of at least one selected from the group consisting of platinum, gold, silver, silicon, and silicon-silicon carbide. If these substances are used in combination, the characteristics of the resulting electrodes can be changed depending on the characteristics required for the exhaust gas treating body. Energizing the exhaust gas treating body using these electrodes can cause the exhaust gas treating body to suitably generate heat.

The inorganic fibers in the holding sealing material of the present invention preferably include at least one material selected from alumina fibers, alumina-silica fibers, silica fibers, and biosoluble fibers.

Since these fibers have excellent heat resistance, the inorganic fibers including at least one material selected from alumina fibers, alumina-silica fibers, silica fibers, and biosoluble fibers do not cause problems such as deterioration and thus allow the holding sealing material to maintain its functions at satisfactory levels even when the exhaust gas treating body is sufficiently hot as a result of having been energized for heat generation. Also, if the inorganic fibers are biosoluble fibers which are dissolved in the body, the inorganic fibers do not damage the health of workers in manufacture of exhaust gas purifying apparatuses using the holding sealing material even when inhaled by the workers, for example.

The method of manufacturing the holding sealing material according to the present invention includes the steps of preparing a mat that contains inorganic fibers and has a rectangular shape in a plan view, and arranging at least one pair of electrodes on a main surface of the mat.

The method for manufacturing the holding sealing material according to the present invention enables manufacture of the holding sealing material of the present invention.

The exhaust gas purifying apparatus includes: a pillar-shaped exhaust gas treating body; a holding sealing material arranged around the exhaust gas treating body; and a casing that houses the exhaust gas treating body, the exhaust gas treating body having electric conductivity, the holding sealing material being the holding sealing material of the present invention which has a mat that contains inorganic fibers and has a rectangular shape in a plan view, and at least one pair of electrodes arranged on a main surface of the mat, the holding sealing material being wound around the exhaust gas treating body, with the main surface of the mat in contact with the exhaust gas treating body.

The exhaust gas purifying apparatus of the present invention provides the above effects because it includes the holding sealing material of the present invention.

The method for manufacturing the exhaust gas purifying apparatus of the present invention includes: preparing a mat that contains inorganic fibers and has a rectangular shape in a plan view;arranging at least one pair of electrodes on a main surface of the mat; winding the holding sealing material around the exhaust gas treating body so as to bring the main surface of the mat into contact with the exhaust gas treating body having electric conductivity, the main surface including the at least one pair of electrodes arranged thereon; and housing the exhaust gas treating body with the holding sealing material wound therearound into a casing.

In the method for manufacturing the exhaust gas purifying apparatus according to the present invention, after a holding sealing material having at least one pair of electrodes on a main surface of a mat is manufactured by the method for manufacturing the holding sealing material, the thus manufactured holding sealing material is wound around the exhaust gas treating body such that a main face having electrodes arranged on the mat is brought into contact with the exhaust gas treating body having electric conductivity, and the exhaust gas treating body with the holding sealing material wound therearound is housed into a casing by, for example, press fitting. This method enables comparatively easy manufacture of an exhaust gas purifying apparatus having at least one pair of electrodes between the mat of the holding sealing material and the exhaust gas treating body.

### BRIEF DESCRIPTION OF DRAWINGS

[Fig. 1] Fig. 1 is a cross-sectional view schematically illustrating an example of an exhaust gas purifying apparatus including the holding sealing material of the present invention.
[Fig. 2] Fig. 2 is a perspective view schematically illustrating an example of the holding sealing material of the present invention.
[Fig. 3] Fig. 3 is a perspective view schematically illustrating an example of an exhaust gas treating body for an exhaust gas purifying apparatus including the holding sealing material of the present invention.
[Fig. 4] Fig. 4 is a perspective view schematically illustrating an example of a step of housing an exhaust gas treating body with the holding sealing material of the present invention wound therearound into a casing.
[Fig. 5] Fig. 5 is a perspective view schematically illustrating another example of the holding sealing material of the present invention.
[Fig. 6] Fig. 6 is a cross-sectional view schematically illustrating an example of a conventional catalyst converter for exhaust gas purification which utilizes metallic catalyst carriers as heating resistors.

### DESCRIPTION OF EMBODIMENTS

Hereafter, the present invention is described in detail. The present invention, however, is not limited by the following description, and appropriate changes may be made without departing from the scope of the present invention.

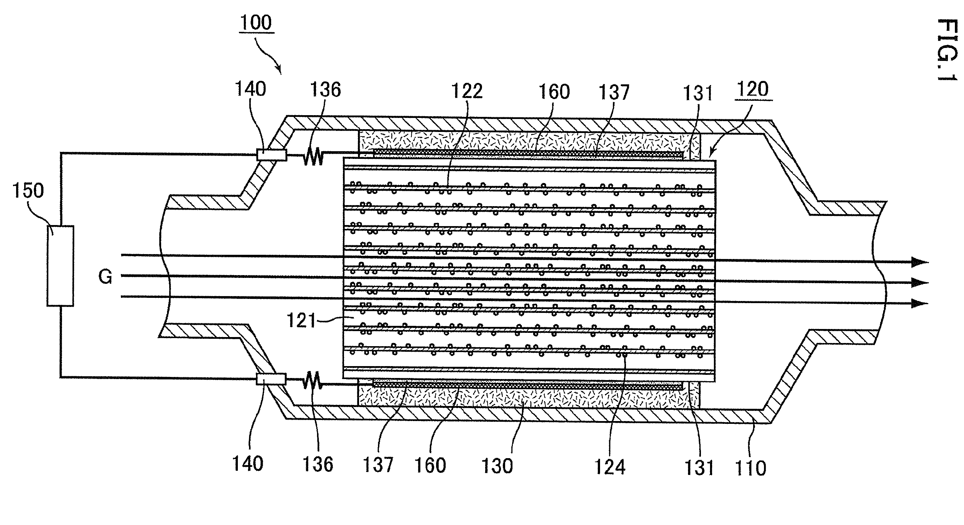

Fig. 1 is a cross-sectional view schematically illustrating an example of an exhaust gas purifying apparatus including the holding sealing material of the present invention.

An exhaust gas purifying apparatus 100 illustrated in Fig. 1, which is an example of the exhaust gas purifying apparatus of the present invention, includes a casing 110, an exhaust gas treating body 120 that is housed in the casing 110 and has electric conductivity, and a holding sealing material 130 that is arranged between the exhaust gas treating body 120 the casing 110.

The exhaust gas treating body 120 is a pillar-shaped body in which a large number of cells 121 are disposed in the longitudinal direction with cell walls 122 therebetween. To the ends of the casing 110, an inlet pipe for introducing exhaust gases discharged from the internal combustion engine and an outlet pipe for discharging the exhaust gases having passed through the exhaust gas purifying apparatus 100 to the outside may be connected as needed.

The holding sealing material 130 is an example of the holding sealing material of the present invention.

The holding sealing material 130 includes a mat which has a pair of electrodes 160 arranged on a main surface 131 thereof, and also has an organic sheet 137 attached to the main surface 131 to cover the pair of electrodes 160.

The holding sealing material 130 is wound around the exhaust gas treating body 120, with the main surface 131 (having the organic sheet 137 attached thereto) of the mat in contact with the exhaust gas treating body 120.

The pair of electrodes 160 is connected to wires 136. The wires 136 pass through the space between the exhaust gas treating body 120 and the casing 110 to go out of the casing 110 through respective terminal outlets 140 provided in the casing 110, and thereby connect to an external power source 150.

The wires 136 each preferably have a shape extendable in the longitudinal direction of the exhaust gas purifying apparatus 100 in the space between the exhaust gas treating body 120 and the casing 110. In the case that the wires 136 are extendable in the longitudinal direction of the exhaust gas purifying apparatus 100 in the space between the exhaust gas treating body 120 and the casing 110, the wires 136 can absorb external shocks to reduce the chances for the wires 136 to be cut. The extendable shape is not particularly limited, but is preferably a coiled shape, a zigzag shape, or a wavy shape, and more preferably a coiled shape.

Passage of exhaust gases through the exhaust gas purifying apparatus 100 having the above structure is described below with reference to Fig. 1.

When exhaust gases discharged from the internal combustion engine reach the exhaust gas treating body 120 inside the exhaust gas purifying apparatus 100 (in Fig. 1, exhaust gases are indicated by G, and the flow of the exhaust gases is indicated by the arrows), the gases flow into the cells 121 which are open at the end on the exhaust gas inlet side, pass through the cells 121 to come into contact with catalysts 124 supported on the cells 121, and are then discharged from the end on the exhaust gas outlet side. At this time, harmful gas components such as CO, HC, and NOₓ in the exhaust gases are purified by the catalysts 124 supported on the cell walls 122.

In this way, the exhaust gas treating body 120 on which the catalysts 124 are supported is suitable as a catalyst carrier.

In the case of using the organic sheet 137, the pair of electrodes 160 and the exhaust gas treating body 120 are separated by the organic sheet 137. The exhaust gas treating body 120 therefore cannot be energized by passing electricity to the pair of electrodes 160.

The organic sheet 137, however, is pyrolyzed when exhaust gases come into contact with the organic sheet 137 as the exhaust gases pass through the exhaust gas purifying apparatus 100 because the temperature of the exhaust gases is high. As a result, the pair of electrodes 160 and the exhaust gas treating body 120 come into direct contact with each other. Passing electricity to the pair of electrodes 160 in such a state allows energization of the exhaust gas treating body 120.

Next, the holding sealing material 130 of the present invention is described.

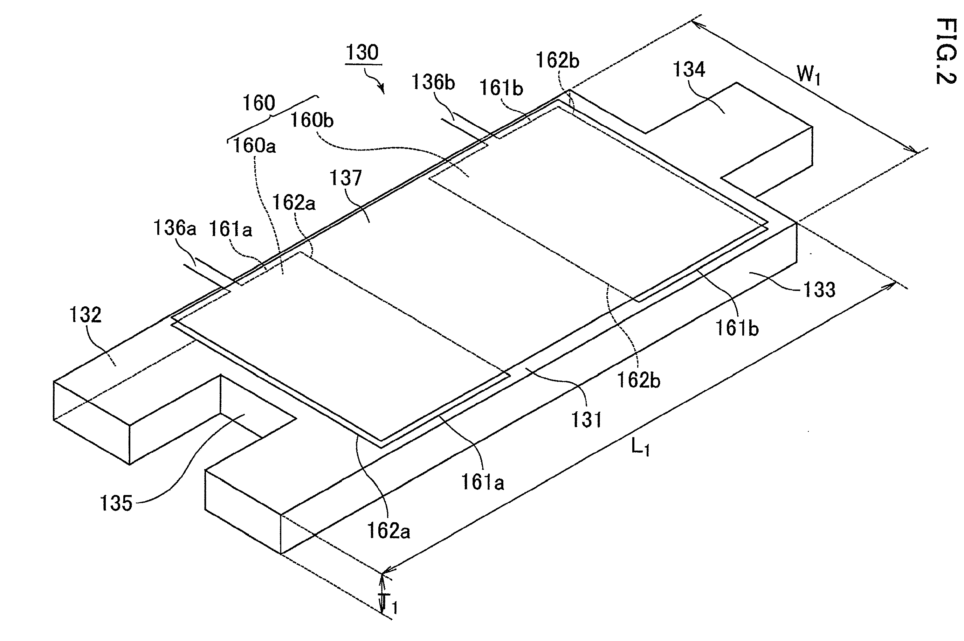

Fig. 2 is a perspective view schematically illustrating an example of the holding sealing material of the present invention.

The holding sealing material 130 illustrated in Fig. 2 includes a mat that has a rectangular shape in a plan view with a predetermined length in the longitudinal direction (hereinafter, indicated by the arrow L₁ in Fig. 2), a predetermined width (hereinafter, indicated by the arrow W₁ in Fig. 2), and a predetermined thickness (hereinafter, indicated by the arrow T₁ in Fig. 2). The mat of the holding sealing material 130 has the main surface 131. The mat of the holding sealing material 130 also has a first side surface 132 and a second side surface 133 that is an opposite side surface of the first side surface 132.

In the holding sealing material 130 illustrated in Fig. 2, the mat has a projected portion 134 at one of its ends in the longitudinal direction, and has a recessed portion 135 at the other end. The projected portion 134 and the recessed portion 135 of the mat of the holding sealing material 130 have shapes that allow the projected portion 134 and the recessed portion 135 to fit each other when the holding sealing material 130 is wound around the exhaust gas treating body 120 for assembly of the exhaust gas purifying apparatus 100.

On the main surface 131 of mat of the holding sealing material 130, the pair of electrodes 160 consisting of a first electrode 160a and a second electrode 160b are arranged.

The first electrode 160a has a rectangular shape in a plan view, which is formed by short sides 161a and long sides 162a substantially perpendicular to the short sides 161a. The length of the short sides 161a is about 1/4 of the length L₁ in the longitudinal direction of the mat of the holding sealing material 130. The length of the long sides 162a is slightly shorter than the width W₁ of the mat of the holding sealing material 130.

The first electrode 160a is arranged on the main surface 131 of the mat of the holding sealing material 130 such that the short sides 161a of the first electrode 160a and the longitudinal direction of the mat of the holding sealing material 130 are substantially parallel to each other.

The second electrode 160b has the same shape as the first electrode 160a. That is, the second electrode 160b has a rectangular shape in a plan view, which is formed by short sides 161b and long sides 162b substantially perpendicular to the short sides 161b. The length of the short side 161b is about 1/4 of the length L₁ in the longitudinal direction of the mat of the holding sealing material 130. The length of the long sides 162b is slightly shorter than the width W₁ of the mat of the holding sealing material 130.

The second electrode 160b is arranged on the main surface 131 of the mat of the holding sealing material 130 such that the short sides 161b of the second electrode 160b and the longitudinal direction of the mat of the holding sealing material 130 are substantially parallel to each other.

The positional relationship of the first electrode 160a and the second electrode 160b is described below.

In the mat of the holding sealing material, the distance between the long side 162a on the recessed portion 135 side and the long side 162b on the recessed portion 135 side is about 1/2 of the length L₁ in the longitudinal direction of the mat of the holding sealing material 130, and the first electrode 160a is located closer to the recessed portion 135 of the mat of the holding sealing material 130 than the second electrode 160b is.

As described below, the shape of the exhaust gas treating body 120 is substantially cylindrical. Hence, if the above positional relationship between the first electrode 160a and the second electrode 160b holds, the first electrode 160a and the second electrode 160b face each other with the axis of the cylinder serving as the exhaust gas treating body 120 in between when the holding sealing material 130 is wound around the exhaust gas treating body 120.

Generally, electric current tends to flow along the shortest path between two electrodes. In the case that the first electrode 160a and the second electrode 160b have the above respective sizes and the positional relationship, electric current tends to flow in the vicinity of the axis of the cylinder serving as the exhaust gas treating body 120. As a result, heat can be generated in the vicinity of the axis of the cylinder serving as the exhaust gas treating body 120.

The first electrode 160a and the second electrode 160b for the holding sealing material 130 of the present invention each are preferably made of at least one material selected from the group consisting of platinum, gold, silver, silicon, and silicon-silicon carbide.

The first electrode 160a and the second electrode 160b exhibit increased conductivity if they each are made of at least one selected from the group consisting of platinum, gold, silver, silicon, and silicon-silicon carbide. If these substances are used in combination, the characteristics of the first electrode 160a and the second electrode 160b can be changed depending on the characteristics required for the exhaust gas treating body 120. Energizing the exhaust gas treating body 120 using these first electrode 160a and second electrode 160b can cause the exhaust gas treating body 120 to suitably generate heat.

The shape of the first electrode 160a and the second electrode 160b may be, for example, a foil-like shape or a linear shape. In the case of a linear shape, the cross-sectional shape thereof may be, for example, a circle, an oval, a sector, or a rectangle. Preferred among these is a foil-like shape.

In the holding sealing material 130 of the present invention, a wire 136a is brazed to the short side 161a of the first electrode 160a on the first side surface 132 side so that the wire 136a and the short side 161a are substantially perpendicular to each other. The wire 136a projects out from the first side surface 132 side.

Similarly, another wire 136b is brazed to the short side 161b of the second electrode 160b on the first side surface 132 side so that the wire 136b and the short side 161b are substantially perpendicular to each other. The wire 136b also projects out from the first side surface 132 side.

The material of the wire 136a and the wire 136b (hereinafter, these are referred to together as "wires 136") is not particularly limited. Still, the material preferably includes at least one selected from the group consisting of nickel, platinum, silver, copper, iron, and stainless steel, and is more preferably nickel. If the material of the wires 136 is nickel, the wires have excellent strength and sufficient electric conductivity.

To the main surface 131 of the mat of the holding sealing material 130, the organic sheet 137 is attached to cover the pair of electrodes 160.

If the organic sheet 137 is attached to the main surface 131 of the mat of the holding sealing material 130 so as to cover the pair of electrodes 160, the organic sheet 137 protects the pair of electrodes 160 to prevent damage on the pair of electrodes 160 due to, for example, external shocks.

If the holding sealing material 130 does not have the organic sheet 137 attached thereto when wound around the exhaust gas treating body 120, the pair of electrodes 160 and the exhaust gas treating body 120 come into direct contact with each other, which may cause the pair of electrodes 160 and the exhaust gas treating body 120 to be rubbed against each other to result in breakage of the pair of electrodes 160. In contrast, the holding sealing material 130 having the organic sheet 137 attached to the main surface 131 of the mat to cover the pair of electrodes 160 does not bring the pair of electrodes 160 and the exhaust gas treating body 120 into direct contact with each other, preventing the pair of electrodes 160 from breakage.

Also, since the holding sealing material 130 allows the pair of electrodes 160 to be fixed on the main surface 131 of the mat of the holding sealing material 130 by the organic sheet 137, the exhaust gas purifying apparatus 100 provided with the pair of electrodes 160 can be easily manufactured by winding the holding sealing material 130, without any change, around the exhaust gas treating body 120 to arrange the pair of electrodes 160 between the mat of the holding sealing material 130 and the exhaust gas treating body 120.

Furthermore, when exhaust gases flow into the exhaust gas purifying apparatus 100 of the present invention including the holding sealing material 130, the organic sheet 137 will be pyrolyzed. As a result, the pair of electrodes 160 and the exhaust gas treating body 120 come into direct contact with each other. Passing electricity to the pair of electrodes 160 in such a state allows energization of the exhaust gas treating body 120 to cause the exhaust gas treating body 120 to generate heat.

The thickness of the organic sheet 137 in the holding sealing material 130 of the present invention is preferably 20 to 200 µm. A thickness of the organic sheet 137 of smaller than 20pm may be excessively thin to cause breakage of the organic sheet 137 in, for example, attachment of the organic sheet 137. A thickness of the organic sheet 137 of greater than 200 µm is not preferred either because it may be excessively thick to cause a very large amount of the organic sheet 137 to be attached per unit weight of the inorganic fibers. This may result in a very large amount of gases such as hydrocarbon gas generated upon decomposition, though the holding sealing material can be press-fitted into the casing 110 without problems.

The organic sheet 137 is preferably made of at least one material selected from the group consisting of polyolefin resins, vinyl resins, polystyrene resins, and polyester resins.

In the case that the organic sheet 137 is made of at least one material selected from the group consisting of polyolefin resins, vinyl resins, polystyrene resins, and polyester resins, the holding sealing material 130 can absorb external shocks because these resins have sufficient flexibility. Also in this case, the organic sheet 137 is more likely to be pyrolyzed when exhaust gases flow into the exhaust gas purifying apparatus 100 including the holding sealing material 130 having the above structure.

The organic sheet 137 may be a nonwoven fabric such as a film, or a woven fabric formed from fibers of any of the above materials.

Examples of the method for attaching the organic sheet 137 to the main surface 131 of the mat of the holding sealing material 130 include attachment using an agent such as an adhesive, tape, or threads, and attachment by thermocompression bonding. Attachment by thermocompression bonding is particularly preferred.

Attachment of the organic sheet 137 onto the main surface 131 of the mat of the holding sealing material 130 by thermocompression bonding allows fixation of the pair of electrodes 160 without any other agent for bonding the pair of electrodes 160 and the organic sheet 137. Accordingly, the resulting exhaust gas purifying apparatus 100 can be more inexpensive.

The inorganic fibers in the mat of the holding sealing material 130 of the present invention preferably include at least one material selected from alumina fibers, alumina-silica fibers, silica fibers, and biosoluble fibers.

Since these fibers have excellent heat resistance, the inorganic fibers including at least one material selected from alumina fibers, alumina-silica fibers, silica fibers, and biosoluble fibers do not cause problems such as deterioration and thus allow the holding sealing material 130 to maintain its functions at satisfactory levels even when the exhaust gas treating body 120 is sufficiently hot as a result of having been energized for heat generation. Also, if the inorganic fibers are biosoluble fibers which are dissolved in the body, the inorganic fibers do not damage the health of workers in manufacture of exhaust gas purifying apparatuses 100 using the holding sealing material 130 even when inhaled by the workers, for example.

In the case that alumina is used for the inorganic fibers constituting the mat of the holding sealing material 130, the inorganic fibers may contain additives such as CaO, MgO, or ZrO₂ as well as alumina.

In the case of using silica, the inorganic fibers may contain additives such as CaO, MgO, or ZrO₂ as well as silica.

In the case of using alumina-silica, the composition ratio thereof by weight is preferably Al₂O₃:SiO₂ = 60:40 to 80:20, and more preferably Al₂O₃:SO₂ = 70:30 to 74:26.

The inorganic fibers constituting the mat of the holding sealing material 130 preferably has an average fiber length of 5 to 150 mm, and more preferably 10 to 80 mm.

An average fiber length of the inorganic fibers of shorter than 5 mm may be excessively short to cause unsatisfactory interlacing of the inorganic fibers, which gives low shear strength to the mat of the holding sealing material 130. An average fiber length of the inorganic fibers of longer than 150 mm may be excessively long to decrease the handleability of the inorganic fibers in manufacture of the mat of the holding sealing material 130. Thereby, the winding properties for the exhaust gas treating body 120 decrease to make the mat of the holding sealing material 130 easily broken.

The inorganic fibers constituting the mat of the holding sealing material 130 of the present invention preferably have an average fiber diameter of 1 to 20 µm, and more preferably 3 to 10 µm.

The average fiber diameter of the inorganic fibers of 1 to 20 µm may sufficiently increase the strength and flexibility of the inorganic fibers to increase the shear strength of the mat of the holding sealing material 130.

An average fiber diameter of the inorganic fibers of smaller than 1 µm may make the inorganic fibers thin and easily breakable to give insufficient tensile strength to the inorganic fibers. An average fiber diameter of the inorganic fibers of greater than 20 µm may not allow the inorganic fibers to easily bend, giving insufficient flexibility to the fibers.

The basis weight (weight per unit area) of the mat of the holding sealing material 130 is not particularly limited, but is preferably 200 to 4000 g/m², and more preferably 1000 to 3000 g/m². A basis weight of less than 200 g/m² may not provide sufficient holding strength to the mat of the holding sealing material 130, while a basis weight of more than 4000 g/m² makes it difficult to reduce the bulky size of the mat of the holding sealing material 130. Therefore, when the exhaust gas purifying apparatus 100 is manufactured using this holding sealing material 130, the exhaust gas treating body 120 tends to come off.

The bulk density (bulk density of the mat of the holding sealing material 130 before winding) of the mat of the holding sealing material 130 is not particularly limited either, but is preferably 0.10 to 0.30 g/cm³. A bulk density of the mat of the holding sealing material 130 of less than 0.10 g/cm³ may have the inorganic fibers interlaced insufficiently to let the inorganic fibers be separated, thereby making it difficult to maintain the predetermined shape of the mat of the holding sealing material 130.

A bulk density of the mat of the holding sealing material 130 of more than 0.30 g/cm³ may make the mat of the holding sealing material 130 stiff to decrease the winding property for the exhaust gas treating body 120, causing easy breakage of the mat of the holding sealing material 130.

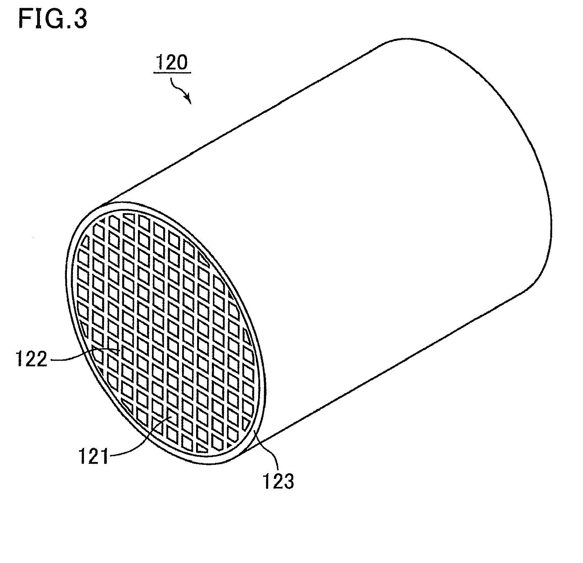

Fig. 3 is a perspective view schematically illustrating an example of an exhaust gas treating body for an exhaust purifying apparatus including the holding sealing material of the present invention.

As illustrated in Fig. 3, the exhaust gas treating body 120 has a substantially cylindrical shape. Also, the exhaust gas treating body 120 is peripherally provided with a peripheral coat layer 123 so that the peripheral portion of the exhaust gas treating body 120 is reinforced, the shape of the peripheral portion is arranged, and the heat insulation of the exhaust gas treating body 120 is increased.

The internal structure of the exhaust gas treating body 120 is the same as described above in description of the exhaust gas purifying apparatus 100 of the present invention including the holding sealing material 130 of the present invention (c.f. Fig. 1).

Although Fig. 3 illustrates as the exhaust gas treating body 120 a catalyst carrier in which neither end of each cell is sealed by a plug, an exhaust gas filter (honeycomb filter) in which either one end of each cell is sealed by a plug may be used.

In the exhaust gas purifying apparatus 100 of the present invention including the holding sealing material 130 of the present invention, the exhaust gas treating body 120 has electric conductivity. The electrical resistance of the exhaust gas treating body 120 is not particularly limited, but is preferably 1 Ω to 10³ Q. An electrical resistance of lower than 1 Q may not lead to a sufficient amount of heat generation. An electrical resistance of higher than 103 Q may be excessively high to disturb the current flow, making the exhaust gas treating body 120 less likely to generate heat.

In the exhaust gas purifying apparatus 100 of the present invention including the holding sealing material 130 of the present invention, the cell density at a cross section of the exhaust gas treating body 120 is not particularly limited. Still, the cell density is preferably from a lower limit of 31.0 pcs/cm² (200 pcs/inch²) to an upper limit of 93.0 pcs/cm² (600 pcs/inch²), and more preferably from a lower limit of 38.8 pcs/cm² (250 pcs/inch²) to an upper limit of 77.5 pcs/cm² (500 pcs/inch²).

In the exhaust gas purifying apparatus 100 of the present invention including the holding sealing material 130 of the present invention, the exhaust gas treating body 120 is not particularly limited, and may be a ceramic honeycomb fired body in which a large number of cells are disposed in the longitudinal direction with cell walls therebetween.

If the exhaust gas treating body 120 is a ceramic honeycomb fired body, the exhaust gas treating body 120 is easily broken by, for example, mechanical shocks because ceramic is a brittle material. The holding sealing material 130 surrounding the exhaust gas treating body 120, however, can absorb the shocks to prevent generation of cracks or the like defects in the exhaust gas treating body 120 by mechanical shocks or thermal shocks.

The honeycomb fired body for the exhaust gas purifying apparatus 100 of the present invention including the holding sealing material 130 of the present invention is preferably a silicon carbide based porous ceramic body.

Since the silicon carbide based porous fired body generates heat when energized, the fired body is suitable as a heating element.

Also because a silicon carbide based porous fired body has excellent heat resistance, excellent corrosion resistance, high strength, and high rigidity, the exhaust gas treating body 120 is less likely to have cracks due to factors such as thermal stress even when the exhaust gas purifying apparatus 100 is repeatedly used for a long period of time.

The exhaust gas treating body 120 in the exhaust gas purifying apparatus 100 of the present invention including the holding sealing material 130 of the present invention is not particularly limited, but may be a metallic honeycomb body in which a large number of cells are disposed in the longitudinal direction with cell walls therebetween.

Since metallic honeycomb bodies generate heat when energized, they are suitable as a heating element. Metallic honeycomb bodies also reduce pressure loss and heat capacity. Furthermore, metallic honeycomb bodies are less likely to cause cracks even when subjected to a strong shock.

On the exhaust gas treating body 120 in the exhaust gas purifying apparatus 100 of the present invention including the holding sealing material 130 of the present invention, the catalysts 124 for purifying exhaust gases are supported. The catalysts 124 supported are preferably, for example, noble metals such as platinum, palladium, and rhodium. Particularly preferred among these is platinum. Other possible catalysts include alkali metals such as potassium and sodium, and alkaline earth metals such as barium. These catalysts may be used alone or in combination.

If these catalysts are supported, harmful exhaust gas components can be suitably purified.

Next, the casing 110 constituting the exhaust gas purifying apparatus 100 of the present invention including the holding sealing material 130 of the present invention is described.

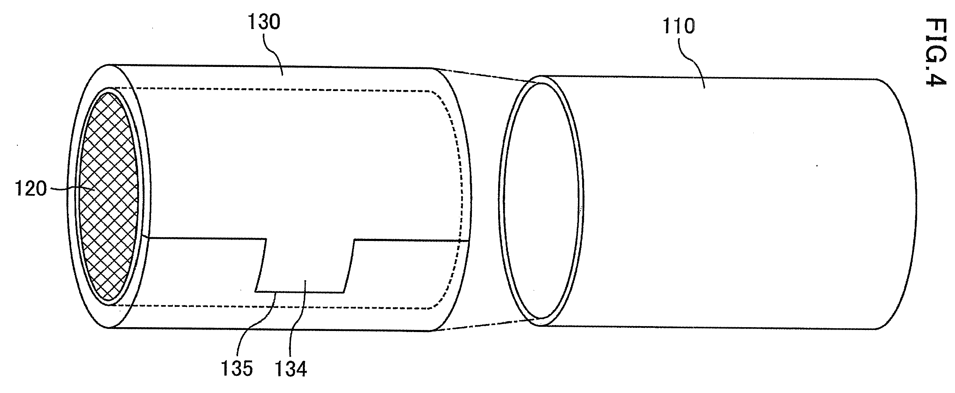

Fig. 4 is a perspective view schematically illustrating an example of a step of housing an exhaust gas treating body with the holding sealing material of the present invention wound therearound into a casing.

The casing 110 is mainly made of a metal such as stainless steel, and may have a substantially cylindrical shape with smaller inner diameters at both ends than the inner diameter at the center portion as illustrated in Fig. 1, or a substantially cylindrical shape with a constant inner diameter as illustrated in Fig. 4.

The inner diameter of the casing 110 (inner diameter of the portion for housing the exhaust gas treating body 120) is preferably slightly smaller than the total length of the diameter of the ends of the exhaust gas treating body 120 and the thickness of the holding sealing material 130 in the state of being wound around the exhaust gas treating body 120.

The material of the casing 110 is not particularly limited if it is a heat resistant metal. Specific examples thereof include metals such as stainless steel, aluminum, and iron.

One example of the method for manufacturing the holding sealing material 130 of the present invention is described.

The method for manufacturing the holding sealing material 130 of the present invention includes the steps of preparing a mat that contains inorganic fibers and has a rectangular shape in a plan view, and arranging at least one pair of electrodes on a main surface of the mat.

The step of preparing a mat is described.

A mat for forming the holding sealing material 130 of the present invention is prepared. The mat is a needle-punched mat that has a rectangular shape in a plan view with long sides in the longitudinal direction and short sides almost perpendicular to the long sides having a predetermined length. A needle-punched mat is manufactured through the steps of: spinning a mixture for spinning by a blowing method; producing a sheet by compacting an inorganic fiber precursor resulting from the spinning; needle-punching the sheet; firing; impregnating the needle-punched sheet with a binder; drying; and cutting. The needle punching refers to inserting and drawing a fiber-interlacing tool such as needles into and from the sheet of an inorganic fiber precursor.

The inorganic fibers for forming a mat can include at least one material selected from alumina fibers, alumina-silica fibers, silica fibers, and biosoluble fibers.

The needle punching can be carried out using a needle-punching apparatus. A needle-punching apparatus includes a supporting plate configured to support a sheet of an inorganic fiber precursor, and a needle board that is provided above the supporting plate and is capable of reciprocating in the piercing direction (the thickness direction of a base mat). The needle board is provided with a large number of needles. This needle board is configured to move along the sheet of an inorganic fiber precursor placed on the supporting plate while inserting and drawing the large number of needles into and from the sheet of an inorganic fiber precursor so as to interlace complexly the fibers constituting the inorganic fiber precursor. The number of repetition of the needle punching and the number of needles may be changed depending on the desired results including the bulk density and basis weight.

To the needle-punched sheet, a binder is preferably adhered. If a binder is adhered to the sheet, the inorganic fibers can be more strongly interlaced, and the bulky size of the mat can be reduced.

The binder may be an emulsion prepared by dispersing, for example, acrylic latex or rubber latex in water. This binder is evenly sprayed onto the entire mat by a device such as a spray, so that the binder adheres to the mat.

The mat is compaction-dried as described above in order to remove moisture and the like in the binder. The drying condition includes, for example, drying at 95°C to 150°C for 1 to 30 minutes.

The sheet with the binder adhered thereto is cut into a predetermined size, and thereby a mat of the holding sealing material 130 is manufactured.

The step of arranging the pair of electrodes 160 on the main surface 131 of the mat of the manufactured holding sealing material 130 is described.

The first electrode 160a is arranged on the main surface 131 of the mat of the holding sealing material 130 such that the short sides 161a of the first electrode 160a and the longitudinal direction of the mat of the holding sealing material 130 are parallel to each other. The second electrode 160b is arranged on the main surface 131 of the mat of the holding sealing material 130 such that the distance between the long side 162a of the first electrode 160a on the recessed portion 135 side and the long side 162b of the second electrode 160b on the recessed portion 135 side is 1/2 of the length L₁ in the longitudinal direction of the mat of the holding sealing material 130. Here, the second electrode 160b is arranged on the main surface 131 of the mat of the holding sealing material 130 such that the short sides 161b thereof and the longitudinal direction of the mat of the holding sealing material 130 are parallel to each other.

Here, the first electrode 160a is located closer to the recessed portion 135 than the second electrode 160b is.

The organic sheet 137 is placed on the main surface 131 of the mat of the holding sealing material 130 so as to cover the first electrode 160a and the second electrode 160b. The organic sheet 137 is then attached to the mat of the holding sealing material 130 by thermocompression bonding.

The holding sealing material 130 of the present invention can be prepared through these steps.

An exemplary method for manufacturing the exhaust gas purifying apparatus 100 of the present invention including the holding sealing material 130 of the present invention is described.

The method for manufacturing the exhaust gas purifying apparatus 100 of the present invention including the holding sealing material 130 of the present invention includes the steps of: winding the holding sealing material 130 around the exhaust gas treating body 120 so as to bring the main surface 131 of the mat of the holding sealing material 130 into contact with the exhaust gas treating body 120 having electric conductivity, the main surface 131 having the pair of electrodes 160 arranged thereon; and housing the exhaust gas treating body 120 with the holding sealing material 130 wound therearound into the casing 110.

The winding step is described.

The holding sealing material 130 of the present invention prepared through the above steps is wound around the exhaust gas treating body 120 (hereinafter, the exhaust gas treating body 120 with the holding sealing material 130 wound therearound is referred to as a "wound body").

Here, the holding sealing material 130 is wound so as to bring the main surface 131 of the mat of the holding sealing material 130 into contact with the exhaust gas treating body 120, the main surface 131 having the pair of electrodes 160 arranged thereon.

The housing step is described.

The wound body produced in the winding step is housed into the casing 110.

The inner diameter of the casing 110 is slightly smaller than the outermost diameter of the exhaust gas treating body 120 with the holding sealing material 130 wound therearound, in order for the housed holding sealing material 130 to be compressed to exert a certain surface pressure (i.e., force for holding an exhaust gas treating body) .

After the housing, the wires 136 are taken out from the respective terminal outlets 140 and connected to the external power source 150.

Examples of the method for housing the exhaust gas treating body 120 with the holding sealing material 130 wound therearound into the casing 110 at the housing step include a press-fitting method (stuffing method) of press fitting the exhaust gas treating body 120 with the holding sealing material 130 wound therearound to a predetermined position inside the casing 110; a sizing method (swaging method) of inserting the exhaust gas treating body 120 with the holding sealing material 130 wound therearound into the casing 110, and compressing the casing 110 from the outer periphery side so as to reduce the inner diameter of the casing 110; and a clam shell method of making the casing 110 separable into two parts of the first casing and the second casing, placing the exhaust gas treating body 120 with the holding sealing material 130 wound therearound in the first casing, and covering the first casing with the second casing to seal the exhaust gas treating body 120 with the holding sealing material 130 wound therearound.

The casing 110 housing the exhaust gas treating body 120 is set into the exhaust pipe of a vehicle. Exhaust gases with a rising temperature are discharged through the pipe. Thereby, the organic sheet 137 attached to the main surface 131 of the mat of the holding sealing material 130 is pyrolyzed. Once the organic sheet 137 is pyrolyzed, the exhaust gas treating body 120 and the pair of electrodes 160 come into contact with each other, whereby the exhaust gas purifying apparatus 100 capable of energizing the exhaust gas treating body 120 is completed.

Before setting of the casing 110 housing the exhaust gas treating body 120 in the exhaust pipe of a vehicle, the casing 110 housing the exhaust gas treating body 120 may be heated to pyrolyze the organic sheet 137.

Through these steps, the exhaust gas purifying apparatus 100 of the present invention including the holding sealing material 130 of the present invention is manufactured.

The holding sealing material, the method for manufacturing the holding sealing material, the exhaust gas purifying apparatus, and the method for manufacturing the exhaust gas purifying apparatus according to the present invention may be those described below as examples.

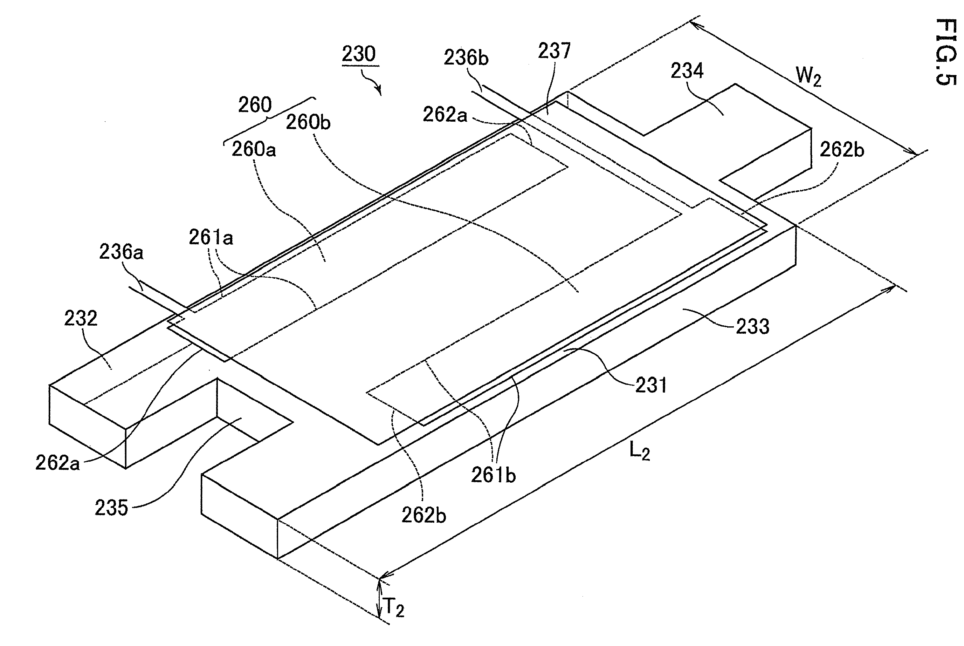

Fig. 5 is a perspective view schematically illustrating another example of the holding sealing material of the present invention.

A holding sealing material 230 illustrated in Fig. 5, an example of the holding sealing material of the present invention, includes a mat that has a rectangular shape in a plan view with a predetermined length L₂ in the longitudinal direction, a predetermined width W₂, and a predetermined thickness T₂, similarly to the mat of the holding sealing material 130 of the present invention illustrated in Fig. 2. The mat of the holding sealing material 230 has a main surface 231, a first side surface 232, and a second side surface 233.

The mat of the holding sealing material 230 illustrated in Fig. 5 has a projected portion 234 at one of the ends in the length direction thereof, and a recessed portion 235 at the other end.

The mat of the holding sealing material 230 has a pair of electrodes 260, consisting of a first electrode 260a and a second electrode 260b, arranged on a main surface 231 thereof, and also has an organic sheet 237 attached to the main surface 231 to cover the pair of electrodes 260.

The holding sealing material 230 of the present invention is different from the holding sealing material 130 of the present invention in the shapes and arrangement positions of the first electrode and the second electrode constituting the pair of electrodes.

The first electrode 260a has a rectangular shape in a plan view, which is formed by long sides 261a and short sides 262a substantially perpendicular to the long sides 261a. The length of the long sides 261a is slightly shorter than the length L₂ in the longitudinal direction of the mat of the holding sealing material 230. The length of the short sides 262a is about 1/4 of the width W₂ of the mat of the holding sealing material 230.

The first electrode 260a is arranged such that the long sides 261a and the longitudinal direction of the mat of the holding sealing material 230 are substantially parallel to each other.

The second electrode 260b has the same shape as the first electrode 260a. That is, the second electrode 260b has a rectangular shape in a plan view, which is formed by long sides 261b and short sides 262b substantially perpendicular to the long sides 261b. The length of the long sides 261b is slightly shorter than the length L₂ in the longitudinal direction of the mat of the holding sealing material 230. The length of the short sides 262b is about 1/4 of the width W₂ of the mat of the holding sealing material 230.

The second electrode 260b is arranged such that the long sides 261b and the longitudinal direction of the mat of the holding sealing material 230 are substantially parallel to each other.

The first electrode 260a is located closer to the first side surface 232 than the second electrode 260b is.

Also, the first electrode 260a is located slightly on the recessed portion 235 side so as not to completely overlap the second electrode 260b when translated in the direction perpendicular to the longitudinal direction of the mat of the holding sealing material 230.

In the holding sealing material 230 of the present invention, a wire 236a is brazed to the long side 261a of the first electrode 260a on the first side surface 232 side so that the wire 236a and the long side 261a are substantially perpendicular to each other. The wire 236a projects out from the first side surface 232 side.

Similarly, another wire 236b is brazed to the long side 261b of the second electrode 260b on the first side surface 232 side so that the wire 236b and the long side 261b are substantially perpendicular to each other.

As described above, the first electrode 260a is slightly on the recessed portion 235 side of the mat of the holding sealing material 230. The mat of the holding sealing material 230 therefore has a region in which a straight line perpendicular to the long sides 261b of the second electrode 260b does not cross the long sides 261a of the first electrode 260a. The wire 236b brazed to the long side 261b of the second electrode 260b passes through this region to project from the first side surface 232 side.

Accordingly, the holding sealing material 230 of the present invention does not cause short circuit due to contact between the first electrode 260a and the wire 236b.

With the first electrode 260a and the second electrode 260b arranged as described above, the electrodes entirely cover the predetermined outer periphery portion of an exhaust gas treating body when the holding sealing material 230 is wound around the exhaust gas treating body. This structure enables the exhaust gas treating body to generate heat from its entire outer periphery.

Detailed description of an exhaust gas purifying apparatus including the holding sealing material 230 of the present invention is omitted because the apparatus is the same as the exhaust gas purifying apparatus 100 of the present invention except that the holding sealing material is changed to the holding sealing material 230.

The method for manufacturing the holding sealing material 230 of the present invention is the same as the method for manufacturing the holding sealing material 130 of the present invention described above, except that the shapes of the electrodes, arrangement positions, and the positions for brazing wires are changed. The shapes of the electrodes, arrangement positions, and the positions for brazing wires are the same as described above.

The same applies to the method for manufacturing the exhaust gas purifying apparatus including the holding sealing material 230 of the present invention.

The holding sealing material of the present invention and the exhaust gas purifying apparatus of the present invention may have the following features.

Although the holding sealing materials 130 and 230 of the present invention each have one pair of electrodes arranged on the main surface of the mat, the holding sealing material of the present invention may have two or more pairs of electrodes arranged. If two or more pairs of electrodes are arranged, it is possible to pass electricity even when one of the electrodes is damaged and broken. This structure therefore provides an excellent fail-safe system.

Although the holding sealing materials 130 and 230 of the present invention each have the pair of electrodes fixed to the main surface of the mat by the attached organic sheet, the holding sealing material of the present invention may have a pair of electrodes fixed without an organic sheet. Examples of the method for fixing a pair of electrodes include methods using a tool such as an adhesive, tape, or threads.

An exhaust gas purifying apparatus including such a holding sealing material has the pair of electrodes and the exhaust gas treating body in contact with each other in the initial condition. Therefore, it is possible, in the initial condition, to pass electricity to the pair of electrodes to energize the exhaust gas treating body so as to cause the exhaust gas treating body to generate heat.

Although the holding sealing materials 130 and 230 of the present invention each have one organic sheet attached to the main surface of the mat to cover the pair of electrodes, the holding sealing material of the present invention may have multiple organic sheets attached to the main surface of the mat to cover the respective electrodes constituting one pair.

The holding sealing materials 130 and 230 of the present invention have an organic sheet attached to the main surface the mat to cover the pair of electrodes arranged on the main surface. The holding sealing material of the present invention, however, may be formed by attaching a pair of electrodes to an organic sheet, and attaching the organic sheet to the main surface of the mat of the holding sealing material so as to bring the pair of electrodes into contact with the main surface. Examples of the method for attaching a pair of electrodes include methods using a tool such as an adhesive, tape, or threads.

The holding sealing materials 130 and 230 of the present invention each have a pair of electrodes arranged on the main surface of the mat, and an organic sheet attached to cover the pair of electrodes. The holding sealing material of the present invention, however, may be formed by screen-printing a conductive paste for forming a pair of electrodes on a surface of an organic sheet, and attaching the organic sheet to the main surface of the mat of the holding sealing material so as to bring the surface of the organic sheet having the conductive paste screenprinted thereon into contact with the main surface of the mat.

When an exhaust gas purifying apparatus including such a holding sealing material is heated at 500°C to 1000°C, the conductive paste is sintered to form a pair of electrodes. The organic sheet is pyrolyzed.

The conductive past preferably contains conductive metal particles, a resin, a solvent, and a thickener.

The metal particles contained in the above conductive paste are not particularly limited, but are preferably particles of at least one metal selected from the group consisting of platinum, gold, and silver.

The particle diameter of the metal particles is preferably 0.1 to 100 µm. Particles smaller than 0.1 µm may be easily oxidized, while particles larger than 100 µm are less likely to be sintered, and the resistance of the particle increase.

Examples of the resin in the conductive paste include, but not particularly limited to, epoxy resins and phenol resins. Examples of the solvent include, but not particularly limited to, isopropyl alcohol. Examples of the thickener include, but not particularly limited to, cellulose.

Although the above descriptions have been made assuming that the exhaust gas treating body is an integrated exhaust gas treating body, the exhaust gas treating body constituting the exhaust gas purifying apparatus of the present invention may be an aggregated exhaust gas treating body formed by binding a plurality of units with adhesive layers therebetween.

The exhaust gas treating body constituting the exhaust gas purifying apparatus of the present invention may have any shape other than the cylindrical shape, such as a cylindroid shape or a rectangular pillar shape.

Although the above descriptions have been made assuming that the exhaust gas treating body is a catalyst carrier in which neither end of each cell is sealed by a plug, the exhaust gas treating body constituting the exhaust gas purifying apparatus of the present invention may be a porous body in which either one end of each cell is sealed by a plug. Such an exhaust gas treating body is suitable as a filter for capturing PMs.

If the exhaust gas treating body is a porous body in which either one end of each cell is sealed by a plug, the porous body is preferably a silicon carbide based porous body.

If the exhaust gas treating body is a silicon carbide based porous body, the porosity of the exhaust gas treating body is not particularly limited, but is preferably 35 to 60%.

A porosity of lower than 35% may easily cause clogging in the exhaust gas treating body, while a porosity of higher than 60% may decrease the strength of the exhaust gas treating body to make it easily broken.

The average pore diameter of the exhaust gas-treating body is preferably 5 to 30 µm.

An average pore diameter of smaller than 5 µm may easily cause clogging with PMs. An average pore diameter of larger than 30 µm may allow PMs to pass through the pores to let the pores fail to capture PMs, disabling the exhaust gas treating body to function as a filter.

The above porosity and pore diameter can be measured by known measurement methods using a scanning electron microscope (SEM).

The effects of the holding sealing material of the present invention and the exhaust gas purifying apparatus of the present invention are listed below.
(1) The exhaust gas purifying apparatus including the holding sealing material of the present invention requires no holes in the mat of the holding sealing material. Therefore, it is not necessary to reduce the insulation area. For this reason, the exhaust gas purifying apparatus provided does not cause a decrease in the total repulsive power of the holding sealing material, and can sufficiently insulate the exhaust gas treating body using the holding sealing material.
(2) The holding sealing material of such an exhaust gas purifying apparatus has electrodes. In such an exhaust gas purifying apparatus, the exhaust gas treating body having electric conductivity can be energized at a desired timing to cause the exhaust gas treating body to generate heat.
   Thus, such an exhaust gas purifying apparatus not only can increase the temperature of the exhaust gas treating body (catalyst carrier) immediately after the start of an internal combustion engine (e.g., gasoline engine) but also can cause the exhaust gas treating body to generate heat to maintain its temperature at a predetermined temperature or higher in a vehicle equipped with a motor and an engine (e.g., hybrid vehicle) when the motor is running but the engine is not running. The exhaust gas treating body therefore can function immediately as an exhaust gas purifying apparatus.
(3) In the exhaust gas purifying apparatus including the holding sealing material of the present invention, the electrodes arranged on the mat of the holding sealing material are fixed between the mat of the holding sealing material and the exhaust gas treating body by the surface pressure from the mat of the holding sealing material. Even when the volume of the exhaust gas treating body is increased as a result of thermal expansion, the mat of the holding sealing material can absorb the increase in the volume. Therefore, the electrodes are less likely to come off the exhaust gas treating body and to cause connection failure even when the volume of the exhaust gas treating body increases to have a different shape.
(4) The exhaust gas purifying apparatus including the holding sealing material of the present invention does not require insertion of electrodes from the outside of the casing as in the case of conventional exhaust gas purifying apparatuses, which eliminates the need for forming holes in the casing and the mat of the holding sealing material.
   Therefore, there is no need for matching the positions of the casing and the holding sealing material in manufacturing the exhaust gas purifying apparatus. The exhaust gas treating body around which the holding sealing material is wound can accordingly be housed in the casing by, for example, press fitting or sizing.

### EXAMPLES

Hereinafter, the present invention is more specifically described by way of examples which, however, not intended to limit the scope of the present invention.

### (Example 1)

### (1) Preparation of holding sealing material

### (a-1) Spinning

A silica sol was added to an aqueous basic aluminum chloride solution adjusted to have an Al content of 70 g/L and an atomic ratio of Al:Cl = 1:1.8 such that the composition ratio (by weight) of the inorganic fibers after firing would be Al₂O₃:SiO₂ = 72:28. To the mixture was added a proper amount of an organic polymer (polyvinyl alcohol), and thereby a mixed solution was prepared.

The obtained mixed solution was concentrated to give a mixture for spinning. The mixture for spinning was spun by blowing to produce an inorganic fiber precursor having an average fiber length of 100 mm and an average fiber diameter of 5.1 µm.

### (a-2) Compaction

The inorganic fiber precursor obtained in the above step (a-1) was compacted to produce a continuous precursor sheet.

### (a-3) Needle punching

The sheet obtained in the above step (a-2) was continuously needle-punched under the following conditions, so that a needle-punched body was manufactured.

First, a needle board having needles attached thereto at a density of 21 pcs/cm² was prepared. Next, the needle board was set above one of the surfaces of the sheet, and needle punching was carried out by allowing the needle board to descend and ascend once along the thickness direction of the sheet so that a needle-punched body was manufactured. On this occasion, each needle was made to penetrate the sheet until a barb formed on the tip of the needle had completely protruded from the surface on the opposite side of the sheet.

### (a-4) Firing

The needle-punched body obtained in the above step (a-3) was continuously fired at a maximum temperature of 1250°C, so that a fired sheet formed from inorganic fibers including alumina and silica was manufactured. The average fiber diameter of the inorganic fibers was 5.1 µm, and the minimum inorganic fiber diameter was 3.2 µm. A sheet formed from alumina fibers obtained thereby had a bulk density of 0.15 g/cm³ and a basis weight of 1400 g/m².

### (a-5) Cutting

The fired sheet obtained in the above step (a-4) was cut into a cut-off sheet.

### (a-6) Impregnation

The cut-off sheet obtained in the above step (a-5) was flow-coated with an organic binder solution (acrylic latex) containing an acrylic resin serving as an organic binder, so that the cut-off sheet was impregnated with the organic binder. Thereby, an impregnated sheet was manufactured.

### (a-7) Drying

An excessive organic binder solution was removed by suction from the impregnated sheet obtained in the above step (a-6), and the resulting product was dried under pressure, so that a needle-punched mat having a thickness of 8.2 mm was manufactured.

### (a-8) Cutting

The thus obtained mat was cut into a mat for the holding sealing material 130 that has a size in a plan view of 330 mm (length) × 100 mm (width) with a projected portion 134 of 35 mm (length) × 33 mm (width) at one end and a recessed portion 135 to fit the projected portion 134 at the other end.

### (b-1) Electrode preparation

Two sheets of platinum foil each having a rectangle shape with short sides of 82.5 mm and long sides of 90 mm in a plan view, and these sheets were used as the first electrode 160a and the second electrode 160b.

### (b-2) Electrode arrangement

The first electrode 160a was arranged on the main surface 131 of the mat for the holding sealing material 130 such that the distance between the recessed portion 135 side end of the mat for the holding sealing material 130 and the long side 162a on the recessed portion 135 side of the first electrode 160a was 135 mm. On this occasion, the short sides 161a of the first electrode 160a and the longitudinal direction of the mat for the holding sealing material 130 were made parallel to each other.

The second electrode 160b was arranged on the main surface 131 of the mat for the holding sealing material 130 such that the distance between the long side 162a of the first electrode 160a on the recessed portion 135 side and the long side 162b of the second electrode 160b on the recessed portion 135 side was 165 mm. On this occasion, the short sides 161b of the second electrode 160b and the longitudinal direction of the mat for the holding sealing material 130 were made parallel to each other.

### (b-3) Brazing

The center portion of the short side 161a on the first side surface 132 side and a nickel wire serving as the wire 136a were brazed by a brazing filler metal made of nickel. The nickel wire was disposed such that it would be substantially perpendicular to the short sides 161a and also project out from the first side surface 132 side of the mat for the holding sealing material 130.

The nickel wire was coiled from a starting point to 20 mm from the starting point. The starting point is 5 mm from the point in contact with the first side surface 132 of the mat for the holding sealing material 130.

The wire 136b was brazed to the second electrode 160b in the same manner.

### (b-4) Organic sheet attachment

On the main surface 131 of the mat for the holding sealing material 130 having the first electrode 160a and the second electrode 160b arranged thereon, the organic sheet 137a that has a size of 270 mm (length) × 95 (width) and is made of polyethylene was placed. The organic sheet 137 made of polyethylene was attached to the main surface 131 of the mat for the holding sealing material 130 by thermocompression bonding. Thereby, the first electrode 160a and the second electrode 160b were fixed to the main surface 131 of the mat for the holding sealing material 130.

The thus manufactured holding sealing material is the holding sealing material of the present example.

### (2) Exhaust gas treating body preparation

### (c-1) Manufacture of molded product

Coarse particles of silicon carbide with an average particle diameter of 22 µm (52.8% by weight) and fine particles of silicon carbide with an average particle diameter of 0.5 µm (22.6% by weight) were mixed. The resulting mixture was kneaded together with an acrylic resin (2.1% by weight), an organic binder (methyl cellulose, 4.6% by weight), a lubricant (UNILUB from NOF Corp., 2.8% by weight), glycerol (1.3% by weight), and water (13.8% by weight) to give a wet mixture. The wet mixture was extrusion molded, so that a molded body of the exhaust gas treating body 120 illustrated in Fig. 3 was manufactured.

### (c-2) Drying

The molded body of the exhaust gas treating body 120 obtained in the above step (c-1) (raw molded body of the exhaust gas treating body 120) was dried by a microwave dryer, whereby a dried body of the exhaust gas treating body 120 was obtained.

### (c-3) Degreasing

The dried body of the exhaust gas treating body 120 obtained in the above step (c-2) was degreased at 400°C to produce a degreased body of the exhaust gas treating body 120.

### (c-4) Firing

The degreased body of the exhaust gas treating body 120 obtained in the above step (c-3) was fired at 2200°C for three hours in an argon atmosphere under an ordinary pressure, and thereby a silicon carbide sintered body of the exhaust gas treating body 120 having a porosity of 45%, an average pore diameter of 15 µm, the number of cells (cell density) of 300 pcs/inch², and a cell wall thickness of 0.25 mm (10 mil) was manufactured.

### (c-5) Catalyst supporting

The silicon carbide sintered body of the exhaust gas treating body 120 obtained in the above step (c-4) was immersed in a nitric acid platinum solution, was taken out from the nitric acid platinum solution, and was allowed to stand at 600°C for one hour. Thereby, the catalysts 124 (platinum) were supported on the cell walls 122 of the silicon carbide sintered body of the exhaust gas treating body 120.

The thus manufactured silicon carbide sintered body was used as the exhaust gas treating body 120 around which the holding sealing material 130 of the present example would be wound. The exhaust gas treating body 120 has a substantially cylindrical shape with a full length of 100 mm and an outer diameter of 100 mm.

### (3) Winding

The holding sealing material 130 obtained through the above steps was wound onto the entire outer peripheral surface of the exhaust gas treating body 120 obtained through the above steps.

### (4) Housing

The exhaust gas treating body 120 with the holding sealing material 130 wound therearound was stuffed into the casing 110 by press fitting (stuffing). The gap bulk density (GBH) of the mat of the holding sealing material 130 was set to 0.4 g/cm³.

The wires 136 were taken out from the terminal outlets 140 provided in the casing 110 and were connected to the external power source 150.

The thus produced exhaust gas purifying apparatus served as the exhaust gas purifying apparatus of the present example.

The holding sealing material of the present invention essentially features at least one pair of electrodes arranged on a main surface of the mat constituting the holding sealing material.

The desired effect can be achieved by appropriately combining the essential feature with various structures specifically described in the Description of Embodiments (e.g., attachment of an organic sheet, materials of the organic sheet, the method of attaching the organic sheet, materials of the electrodes, shapes of the electrodes, arrangement positions for the electrodes).

### REFERENCE SIGNS LIST

- 100: Exhaust gas purifying apparatus
- 110: Casing
- 120: Exhaust gas treating body
- 121: Cell
- 122: Cell wall
- 123: Peripheral coat layer
- 124: Catalyst
- 130, 230: Holding sealing material
- 131, 231: Main surface
- 132, 232: First side surface
- 133, 233: Second side surface
- 134, 234: Projected portion
- 135, 235: Recessed portion
- 136, 136a, 136b, 236a, 236b: Wire
- 137, 237: Organic sheet
- 140: Terminal outlet
- 150: External power source
- 160, 260: Pair of electrodes
- 160a, 260a: First electrode
- 160b, 260b: Second electrode
- 161a, 161b, 262a, 262b: Short side
- 162a, 162b, 261a, 261b: Long side

## Claims

1. A holding sealing material comprising
a mat that contains inorganic fibers and has a rectangular shape in a plan view, and
at least one pair of electrodes arranged on a main surface of the mat.

2. The holding sealing material according to claim 1, further comprising
an organic sheet attached to the main surface of the mat to cover the electrodes.

3. The holding sealing material according to claim 1 or 2,
wherein the organic sheet is made of at least one material selected from the group consisting of polyolefin resins, vinyl resins, polystyrene resins, and polyester resins.

4. The holding sealing material according to any one of claims 1 to 3,
wherein the organic sheet is attached to the main surface of the mat by thermocompression bonding.

5. The holding sealing material according to any one of claims 1 to 4,
wherein the electrodes each are made of at least one material selected from the group consisting of platinum, gold, silver, silicon, and silicon-silicon carbide.

6. The holding sealing material according to any one of claims 1 to 5,
wherein the inorganic fibers comprise at least one material selected from alumina fibers, alumina-silica fibers, silica fibers, and biosoluble fibers.

7. A method for manufacturing the holding sealing material according to any one of claims 1 to 6, the method comprising the steps of
preparing a mat that contains inorganic fibers and has a rectangular shape in a plan view, and
arranging at least one pair of electrodes on a main surface of the mat.

8. An exhaust gas purifying apparatus comprising:
a pillar-shaped exhaust gas treating body;
a holding sealing material arranged around the exhaust gas treating body; and
a casing that houses the exhaust gas treating body,
the exhaust gas treating body having electric conductivity,
the holding sealing material being the holding sealing material according to any one of claims 1 to 6 which comprises a mat that contains inorganic fibers and has a rectangular shape in a plan view, and at least one pair of electrodes arranged on a main surface of the mat,
the holding sealing material being wound around the exhaust gas treating body, with the main surface of the mat in contact with the exhaust gas treating body.

9. A method for manufacturing the exhaust gas purifying apparatus according to claim 8, the method comprising the steps of:
preparing a mat that contains inorganic fibers and has a rectangular shape in a plan view;
arranging at least one pair of electrodes on a main surface of the mat;
winding the holding sealing material around the exhaust gas treating body so as to bring the main surface of the mat into contact with the exhaust gas treating body having electric conductivity, the main surface comprising the at least one pair of electrodes arranged thereon; and
housing the exhaust gas treating body with the holding sealing material wound therearound into a casing.
